Europäisches Patentamt

European Patent Office

Office européen des brevets

(19)

(11) EP 0 657 019 B1

(12) **FASCICULE DE BREVET EUROPEEN**

(45) Date de publication et mention
de la délivrance du brevet:
**13.05.1998 Bulletin 1998/20**

(21) Numéro de dépôt: **94920519.9**

(22) Date de dépôt: **28.06.1994**

(51) Int Cl.6: **G01C 11/02**

(86) Numéro de dépôt international:
**PCT/FR94/00776**

(87) Numéro de publication internationale:
**WO 95/00820 (05.01.1995 Gazette 1995/02)**

(54) **DISPOSITIF DE PRISE DE VUE A GRAND CHAMP ET A HAUTE RESOLUTION POUR VEHICULE AERIEN**

HOCHAUFLOSENDES WEITWINKEL-ABBILDUNGSGERAT FUR LUFTFAHRZEUG

WIDE-FIELD HIGH-RESOLUTION CAMERA DEVICE FOR AIRCRAFT

(84) Etats contractants désignés:
**DE ES GB IT PT**

(30) Priorité: **28.06.1993 FR 9307826**

(43) Date de publication de la demande:
**14.06.1995 Bulletin 1995/24**

(73) Titulaire: **ISNAV S.A.**
**F-78000 Versailles (FR)**

(72) Inventeur: **DE SALABERRY, Bernard**
**F-78000 Versailles (FR)**

(74) Mandataire: **de Saint-Palais, Arnaud Marie**
**CABINET MOUTARD**
**35, Avenue Victor Hugo**
**78960 Voisins le Bretonneux (FR)**

(56) Documents cités:
EP-A- 0 145 249          DD-A- 281 456
DE-B- 2 432 448          FR-A- 2 696 843
US-A- 4 553 028

## Description

La présente invention concerne un dispositif de prise de vue pour véhicule aérien spécialement adapté aux Avions Légers Télépiloté (ALT) ou aux drones, et qui leur permet, pour un prix très réduit, de remplir toute sorte de mission de reconnaissance.

Deux modes de prises de vue sont aujourd'hui utilisés sur ces véhicules aériens. Ce sont soit des caméras de type vidéo classiques, soit des caméras à balayage ligne.

Les caméras vidéo sont généralement des caméras à capteur matriciel, placées sur un ensemble de cardans stabilisés et peuvent être orientées, par télécommande par exemple, vers une direction d'observation. Elles présentent l'inconvénient de ne transmettre qu'une image à champ latéral limité par le nombre de pixels du capteur. Si elles sont munies d'un objectif à focale variable, la résolution qu'elle procure est inversement proportionnelle au champ balayé.

Les images sont enregistrées ou transmises au sol, demi-trame par demi-trame, si bien que lorsqu'on les observe en arrêt sur image, on ne peut observer commodément que des demi-trames et donc la résolution verticale est limitée à la moitié du nombre de ligne de balayage horizontal.

Les caméras lignes sont constituées d'une barrette de photodiodes, dont le nombre peut dépasser 5000, placée derrière un objectif de très bonne qualité et perpendiculairement à la direction de déplacement du véhicule aérien. Le tout est, le plus souvent, monté sur un ensemble de cardans, stabilisés avec précision, de façon à éliminer les perturbations apportées par les mouvements du véhicule aérien. Le déplacement dudit véhicule aérien crée le balayage longitudinal d'une image dont le balayage latéral est réalisé par l'exploration périodique du signal fourni par chacune des cellules de la barrette. Ce type de caméra a l'avantage de pouvoir reconnaître, en une seule passe, une bande de terrain très large avec une très bonne résolution, typiquement 800 m avec une résolution de 16 cm. Cette résolution latérale dépend évidemment de l'altitude de vol et de la focale de l'objectif. Dans la direction du déplacement du véhicule aérien, la résolution dépend essentiellement de la vitesse de l'avion et de la fréquence de balayage de la barrette. Il est très difficile de la faire descendre en dessous de 15 cm avec une barrette de 5000 points et un avion volant à 120 km/h.

Pour obtenir une résolution homogène en longitudinal et en latéral, il faut soit voler toujours à une même altitude, soit changer d'objectif lorsque le programme ou les conditions météorologiques de la mission changent. L'emploi d'objectif à focale variable, dans cette gamme de résolution, est exclu car un tel matériel, adapté à cette mission et s'il existait, serait très onéreux, encombrant et lourd.

Enfin, ces caméras lignes, en contrepartie de leur avantage de balayer un très large champ latéral, ne permettent pas de mettre en évidence des mouvements se produisant sur le terrain tels que des explosions par exemple.

Les deux types de matériels, caméras vidéo et caméras ligne, répondent donc à des besoins différents et se complètent bien. Malheureusement, il n'est guère possible de les installer simultanément sur un même véhicule aérien du type ALT ou drone et donc de faire remplir les deux types de mission au cours d'un même vol. Dans le cas de la caméra ligne, il faut, avant le départ, adapter l'objectif à l'altitude de la mission, ce qui est une opération peu recommandable sur un théâtre d'opération.

A noter par ailleurs, que les deux types de caméras utilisent des types de transmission vidéo différentes qui nécessitent des dispositifs d'émission adaptés et également fondamentalement différents.

La présente invention apporte une solution qui tout en ne mettant en oeuvre que des moyens extrêmement simples, permet de remplir, au cours d'une même mission, les deux fonctions que sont d'une part la prise de vue à champ très large et à grande résolution et d'autre part la prise de vue pointée sur un point fixe pour l'observation des mouvements. Elle apporte une possibilité nouvelle de détermination de l'altitude exacte de l'avion par rapport au sol, information indispensable pour localiser avec précision des objectifs vus latéralement par le véhicule aérien. En outre, ce dispositif permet d'adapter instantanément le champ observé en fonction des conditions de vol et de la situation au sol. Enfin ce dispositif ne nécessite pas d'asservissements de cardans de haute précision.

Cette invention s'appuie sur l'idée qu'une caméra matricielle, utilisée normalement sur un véhicule aérien en déplacement, et dans le cas ou on ne cherche pas à voir des mouvements rapides de la scène, transmet des informations très redondantes et qu'il suffit de ne disposer que d'un nombre réduit d'images, prises séquentiellement parmi les vingt cinq images qui sont généralement transmises chaque secondes, pour disposer de la même qualité d'information que ce qui peut être obtenu avec une caméra à balayage ligne. Il suffit donc de transmettre des images unitaires, prises successivement dans des directions latérales séparées entre elles d'un angle un peu inférieur à l'angle de champ de la caméra, pour pouvoir reconstituer une image à grand champ latéral et à haute résolution.

Cette invention est donc basée sur l'emploi d'une caméra matricielle, à obturateur rapide, montée sur un support orientable autour d'un axe parallèle à l'axe de déplacement du véhicule aérien, dirigé successivement dans plusieurs directions perpendiculaires à cet axe et séparées entre elles d'un angle prédéterminé et qui transmet une image par position angulaire.

Le brevet européen EP-A-145249 fait état d'un dispositif de prise de vues orientable suivant un axe de roulis et transmettant une succession d'image prises selon des orientations prédéterminées. Ce brevet décrit ensuite des moyens de correction géométrique des vues transmises.

Dans la présente invention, l'utilisation d'un objectif à focale variable permet de faire varier le champ. L'angle entre les axes de prise de vue est, dans ce cas, déterminé par la focale de l'objectif. Ceci permet d'ajuster à tout instant le champ et la résolution à la mission et à l'altitude de vol, ou encore de repasser en mode caméra normale et d'observer, avec la résolution désirée une zone précise de la région survolée.

L'utilisation d'un support orientable à deux axes permet, si nécessaire, de rester en observation plus longtemps sur la même zone pendant un survol ou encore d'incliner fortement la direction de prise de vue et de pouvoir ainsi observer des objets verticaux et même, en utilisant une focale longue, de pouvoir lire des inscriptions tout en conservant un champ d'observation très large.

L'utilisation de deux caméras commandées indépendamment permet d'augmenter encore les performances du système.

L'invention concerne donc un Dispositif de prise de vue à grand champ et à haute résolution pour véhicule aérien du type comprenant :

- une caméra, capable de prendre des images du type télévision,
- un moyen d'orientation de l'axe de prise de vue de ladite caméra autour d'au moins un axe,
- des moyens de commande et de contrôle de l'orientation dudit axe de prise de vue suivant plusieurs positions angulaires successives dans un plan perpendiculaire au déplacement du véhicule aérien,
- des moyens de transmission des images, vers des moyens d'utilisation à distance ou à bord par enregistrement,

caractérisé en ce que ladite caméra est à focale variable et en ce qu'il comporte :

- un séquenceur pour le calcul de la focale de la caméra, de l'angle entre deux positions angulaires successives et du temps de passage entre lesdites deux positions angulaires successives, ledit séquenceur utilisant une information de largeur de terrain à explorer, une information d'altitude du véhicule aérien et une information de vitesse dudit véhicule aérien.
- des moyens de sélection d'images utilisant des signaux issus de la caméra et dudit séquenceur.

L'invention est également avantageusement caractérisée en ce qu'un axe d'orientation de la caméra est disposé de telle sorte qu'il fasse un angle réduit α, de préférence inférieur à 30°, avec un plan horizontal et qu'un plan vertical contenant ledit axe fasse également un angle réduit, de préférence inférieur à 30° avec l'axe de déplacement du véhicule aérien, en ce que les moyens de commande et de contrôle de l'orientation communiquent à la caméra un mouvement de balayage alternatif de période totale T autour dudit axe, ladite période totale T étant donnée par la formule :

$$0,5.(Ha.\sin\beta)/(Va.\cos\alpha) < T < (Ha.\sin\beta)/(Va.\cos\alpha)$$

ou Ha est l'altitude du véhicule aérien par rapport au sol, β est le demi-angle du champ de la caméra dans la direction de la trajectoire du véhicule aérien et Va est la vitesse dudit véhicule aérien, en ce que ledit mouvement de balayage comporte une succession d'intervalles angulaires γ sensiblement égaux parcourus à vitesse angulaire rapide séparés par des passages à vitesse angulaire réduite et de préférence nulle pendant lesquels les moyens de transmissions prélèvent des images qui sont transmises aux moyens d'utilisation, les intervalles angulaires γ étant inférieurs au champ de la caméra dans la direction perpendiculaire à la trajectoire du véhicule aérien.

Des modes de réalisation de l'invention seront décrits ci-après, à titre d'exemples non limitatifs, avec référence aux dessins annexés dans lesquels :

La figure 1 est un schéma de principe montrant le fonctionnement d'un dispositif de prise de vue à grand champ,

La figure 2 est un diagramme du dispositif de prise de vue à grand champ selon l'invention,

La figure 3 est un diagramme du dispositif de prise de vue à grand champ selon l'invention dans une variante munie de deux axes d'orientation,

La figure 4 est une vue de la disposition des images obtenues avec le dispositif de prise de vue à grand champ de la figure 3,

La figure 5 est un diagramme du dispositif de prise de vue à grand champ selon l'invention dans une variante munie de deux caméras ayant chacune deux axes d'orientation.

La figure 6 est une vue de la disposition des images obtenues avec le dispositif de prise de vue à grand champ de la figure 5.

La figure 7 présente les variantes d'entrelacement des trames des images utilisées dans les dispositifs selon l'invention.

La figure 8 est un schéma de principe de la commande d'asservissement en roulis ou en site utilisé dans les dispositifs selon l'invention.

La figure 9 est une variante du schéma de principe de la figure 8. et

La figure 10 présente la forme des signaux à appliquer aux commandes d'orientation du dispositif selon l'invention.

Comme précédemment mentionné, et ainsi que le montre la figure la, le principe de balayage du dispositif de prise de vue à grand champ consiste à déplacer l'axe de prise de vue 1 d'une caméra 2 autour d'un axe de rotation 3 de façon séquentielle. En choisissant par exemple de déplacer la caméra dans sept positions successives repérées de 4 à 10, à partir d'une position initiale repérée par la direction 4, puis de la ramener rapidement dans cette même position initiale, et en faisant en sorte que l'angle entre chacune des positions 4 à 10 que prend successivement l'axe optique de la caméra soit légèrement inférieur au champ latéral de la caméra, on obtient un champ total près de sept fois supérieur à celui de la caméra seule.

Si l'on a pris soin de placer l'axe de rotation sensiblement dans un plan vertical contenant la direction de déplacement du véhicule aérien, la rotation de la caméra se fera autour d'un axe proche de l'axe de roulis de l'avion et balayera un champ perpendiculaire audit déplacement du véhicule aérien.

A titre indicatif, à 800 m d'altitude, avec un champ total de 90°, on obtient aisément l'image d'une bande de terrain de 1600 m de large avec une résolution de 34 cm. Dans ce cas, avec une caméra ayant une matrice standard de 8x6 mm$^2$ et un objectif de 25 mm de focale, la hauteur de chaque image représente environ 190 m et, si le véhicule aérien vole à 150 km/h, soit 40 m/s environ, la séquence totale doit être réalisée en 4,5 s. En tenant compte du temps de retour de la caméra entre les deux positions extrêmes, le temps séparant deux positions successives et l'envoi de deux images est de 0.5 sec.

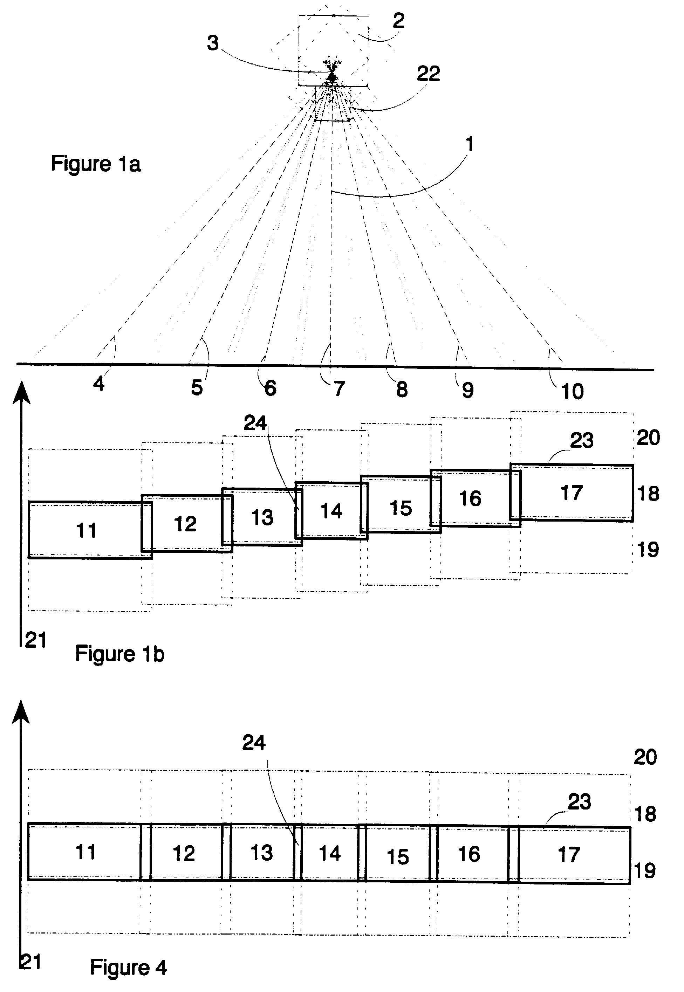

Au sol, ainsi que le montre, de façon indicative, la figure 1b, le champ de la caméra couvre successivement des surfaces 11 à 17 d'une série de vue 18, qui suit une série de vue 19 et qui se reproduit ensuite en une nouvelle série de vue 20 et ainsi de suite, du fait du déplacement du véhicule aérien 21. Chaque vue est légèrement décalée de la précédente et le décalage total est d'une largeur un peu inférieure à la hauteur d'une vue, de façon à assurer un recouvrement 23 tel qu'aucune information ne puisse être perdue. Ce résultat est obtenu en ajustant le temps séparant chacune des positions 11 à 17.

La caméra est équipée d'un objectif à focale variable 22 de sorte que la largeur d'image soit ajustée avec un léger recouvrement 24 pour éviter la aussi de perdre des informations.

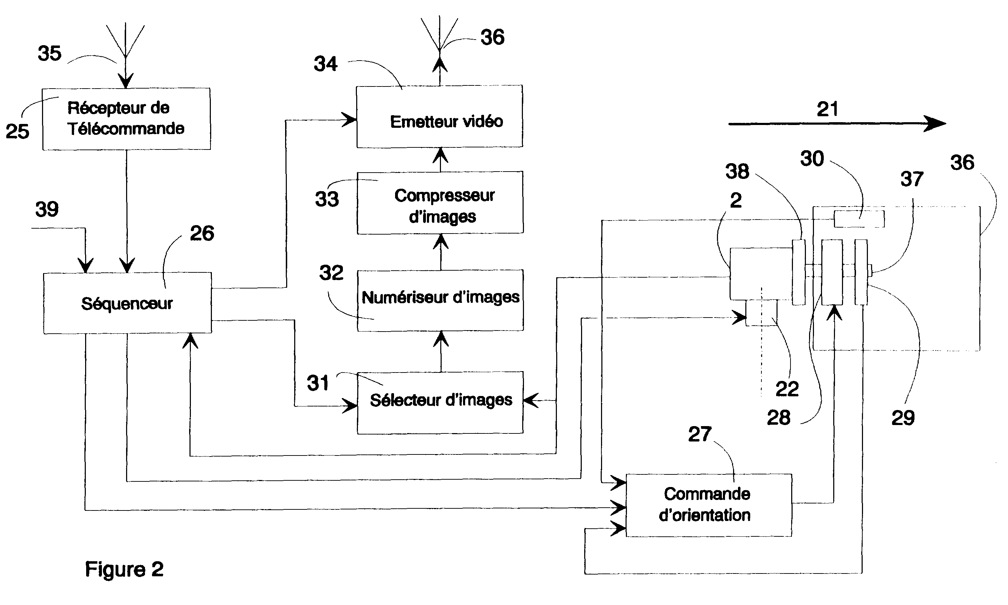

La figure 2 montre le schéma d'un exemple d'ensemble de commande de positionnement pour le dispositif de prise de vue à grand champ.

Il comporte :

- une antenne de réception 35,
- un récepteur de télécommande 25,
- un séquenceur 26,
- une électronique de commande d'orientation 27,
- un boîtier de mécanisme d'orientation 36,
- un sélecteur d'image 31,
- un numériseur d'images 32,
- un compresseur d'images 33,
- un émetteur vidéo 34,
- une antenne d'émission 36.

Le boîtier de mécanisme d'orientation 36 comporte lui même, pour commander un axe 37 :

- une motorisation 28 capable d'entraîner ledit axe 37,
- un capteur de position angulaire 29 capable de mesurer la position dudit axe 37 par rapport au boîtier 36.
- un gyromètre 30 solidaire du boîtier 37.

L'axe 37, placé de préférence dans un plan vertical contenant l'axe de déplacement du véhicule aérien 21 et donc sensiblement orienté selon l'axe de roulis dudit véhicule aérien, porte, à l'extérieur du boîtier 36, un plateau 38, sur lequel est fixée la caméra 2 munie d'un objectif à focale variable 22.

Le séquenceur 26 peut recevoir, par l'intermédiaire du récepteur 25, soit directement des consignes de mode de fonctionnement, d'angles de positionnement successifs pour la caméra, accompagnées d'un ordre de commande de la focale de l'objectif et d'un top de synchronisation, soit des informations d'altitude par rapport au sol et de largeur de terrain à explorer.

Dans un troisième mode de fonctionnement, le séquenceur peut recevoir les mêmes types de consignes en provenance d'un programmateur interne à l'avion.

Dans le premier cas, le séquenceur 26 transmet ces informations à l'objectif à focale variable 22 et à la commande d'orientation 27. Il élabore et envoi au sélecteur d'image 31 les signaux de sélection des images que celui-ci reçoit de la caméra 2.

Dans le second cas, le séquenceur 26 utilise les informations reçues du sol et une information de vitesse de l'avion 39, calculée à bord, pour déterminer l'angle entre chacune des positions successives de la caméra, la focale de l'objectif, la hauteur de l'image projetée au sol, le temps mis par l'avion pour parcourir la distance équivalente et le temps entre chaque position et donc entre chaque image à transmettre. Il envoie ces informations, respectivement à la commande d'orientation 27, à l'objectif à focale variable 22 et au sélecteur d'image 31. Il élabore un signal de synchronisation qu'il envoie directement à l'émetteur vidéo et qui sera utilisé au sol pour reconstituer correctement l'ordre des images.

Dans le troisième cas, les traitements sont les mêmes que dans l'un ou l'autre des deux premiers.

La commande d'orientation 27 asservit la position angulaire du support de la caméra à suivre l'orientation en roulis, commandée par le séquenceur, à l'aide de la motorisation 28, en comparant le signal issu du capteur de position angulaire 29 à ladite orientation commandée. Le gyromètre 30 fournit un signal représentatif de la vitesse angulaire de roulis du véhicule aérien. Ce signal est utilisé, après intégration et filtrage, par la commande d'orientation 27, pour corriger les erreurs d'angle faites sur la mesure fournie par le capteur angulaire du fait des mouvements parasites en roulis du véhicule aérien.

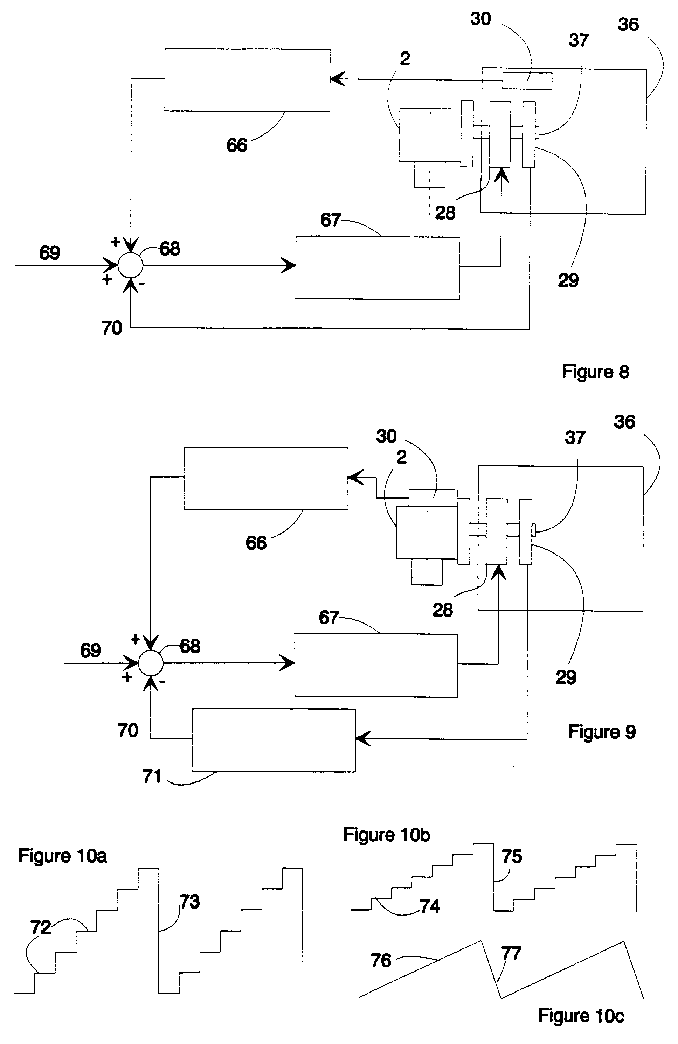

Le principe de la commande d'orientation 27 est détaillé sur la figure 8. Elle comprend :

- un filtre intégrateur 66,
- un sommateur-soustracteur 68,
- un amplificateur correcteur 67.

Le filtre intégrateur 66 comporte une partie qui est de préférence de la forme :

$$p/(1+\tau_1 p)^2$$

la fréquence de coupure $1/\tau_1$ est fixée en fonction des qualités intrinsèques du gyromètre. Typiquement, cette fréquence sera comprise entre 0.2 et 0.01 Hz. Ce filtre fournit un signal représentatif de la position angulaire en roulis du véhicule aérien, moyennée à zéro pour les fréquences très basses.

Le sommateur-soustracteur 68 additionne le signal de commande 69 de l'angle de roulis à imposer à la caméra, le signal de sortie du filtre intégrateur 66 et le signal 70, affecté du signe -, issu du capteur angulaire 29.

La sortie du sommateur-soustracteur est envoyé à un amplificateur correcteur 67 qui commande la motorisation 28.

Une variante de ce dispositif consiste à placer le gyromètre 30 directement sur le support de la caméra 2, ainsi que le montre la figure 9, et d'utiliser son signal pour asservir les mouvements de ladite caméra aux signaux de commande 69. Dans ce cas, un filtre supplémentaire 71, qui comporte une partie dont la forme est de préférence :

$$1/(1+\tau_2 p),$$

est introduit sur le signal 70 de façon à ne laisser passer que les très basses fréquences et à maintenir la position médiane de la caméra à une position moyenne sensiblement centrée sur une direction prédéterminée qui est le plus souvent dans le plan de la verticale du véhicule aérien.

La fréquence de coupure $1/\tau_2$ est également fixée en fonction des qualités intrinsèques du gyromètre. Typiquement, cette fréquence sera comprise entre 0.2 et 0.01 Hz.

Le signal vidéo issu de la caméra 2 est envoyé d'une part au séquenceur 26, d'autre part au sélecteur d'image 31.

Le séquenceur utilise ce signal vidéo comme source de synchronisation pour commander ensuite les orientations successives de la caméra et le sélecteur d'image.

Le sélecteur d'image 31 prélève les images nécessaires pour couvrir la zone survolée, de façon à minimiser le débit d'informations vers le sol. La solution préférée consiste à ne transmettre qu'une seule image par position angulaire de la caméra. Les images sont transmises au numériseur d'images 32.

Le numériseur d'image effectue une conversion analogique numérique du signal vidéo selon une méthode classique. La conversion se fait de préférence sur huit bits pour avoir une bonne résolution de contraste à la réception.

Les images numérisées sont ensuite transmises au compresseur d'image 33 qui utilise lui aussi des techniques maintenant bien connues et envoie ensuite ses informations à l'émetteur vidéo 34 pour l'émission vers le sol par l'antenne 36.

Au sol, les images sont reçues par des moyens classiques de traitement d'images et présentées à un opérateur sur un écran avec des décalages de positions tels que l'image du sol soit reconstituée au mieux.

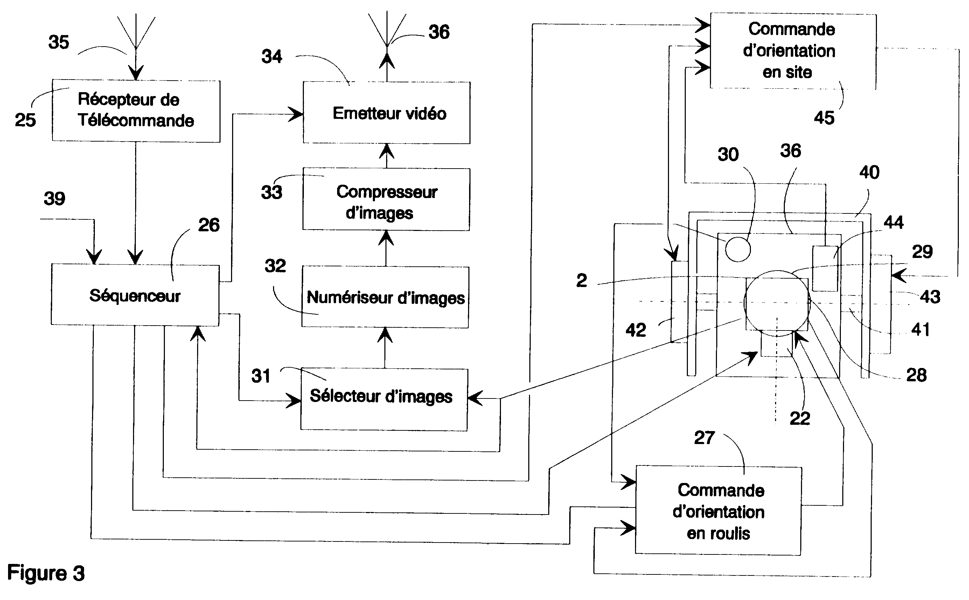

La figure 3 présente une variante préférée de l'invention qui facilite les traitements des images au sol et permet en outre de modifier l'angle de la prise de vue vers le bas, perpendiculairement au mouvement de rotation en roulis.

A cette fin, le boîtier 36 est monté tournant, par l'intermédiaire d'un axe 41, sensiblement perpendiculaire à l'axe 37 et formant un axe de mouvement en site, dans un support 40, solidaire du véhicule aérien. Comme pour le roulis, l'axe 41 est mu par une motorisation 43, qui prend appui sur le support 40, et sa position angulaire est mesurée par un capteur de position angulaire 42 lui aussi solidaire du support 40. Un gyromètre 44 capable de mesurer les vitesses angulaires autour de l'axe de site est de préférence placé sur le boîtier 36.

Ce gyromètre 44 peut également être indépendant du dispositif et faire par exemple partie du dispositif de pilotage du véhicule aérien. Il peut également être solidaire de la partie tournante pour obtenir si nécessaire une stabilisation plus fine de la position angulaire de la caméra.

Une électronique de commande d'orientation en site 45, analogue à celle utilisée en roulis 27, commande la motorisation 42. A cette fin, elle reçoit :

- des consignes angulaires élaborées par le séquenceur 26 et qui correspondent à l'angle dont il faut faire tourner le site de la caméra pour compenser le décalage entre les zones de prise de vue et qui est du au déplacement du véhicule aérien entre deux positions en roulis de la caméra, décalage qu'avait montré la figure 1b.

- une information en provenance du capteur de position angulaire de site 42,
- une information en provenance du gyromètre de site 36.

L'angle mesuré par le capteur de position angulaire de site sert à déterminer une position moyenne du site relatif entre la caméra et le véhicule aérien. La mesure fournie par le gyromètre est utilisée pour filtrer les mouvements de tangage du véhicule aérien. Ces informations sont utilisées de la même façon que pour le roulis selon le même schéma que celui décrit pour la figure 8 avec la même possibilité de variante décrite par la figure 9, en plaçant le gyromètre de site 36 sur la partie mobile en site.

L'angle de décalage en site à imposer entre chaque position de la caméra en roulis peut s'écrire : da = Va. dt/h ou Va est la vitesse du véhicule aérien, dt est l'intervalle de temps entre deux positions successives en roulis et h l'altitude du véhicule aérien par rapport au sol.

L'angle de décalage en site total commandé est incrémenté de la valeur da à chaque pas de roulis. Il est ramené à la valeur initiale en même temps que la position en roulis revient au point de départ.

La figure 10b montre un signal typique à imposer à la commande en site pour obtenir le résultat recherché. La hauteur de chaque marche d'escalier a la valeur da.

La figure 10c montre une solution avantageuse pour cette commande en site qui tient compte du fait que la vitesse du véhicule aérien est relativement constante. Si l'on impose à l'angle de site une vitesse angulaire da/dt = Va/h, pendant que l'angle de roulis prend toutes les positions successives d'une séquence, la caméra balayera bien sur le sol une bande de terrain perpendiculaire à la trajectoire du véhicule aérien. Le signal de commande en site est alors une dent de scie dont la pente de montée 76 est égale à Va/h et dont la pente de retour est telle que le site soit revenu à sa position initiale pendant le retour de la caméra en roulis.

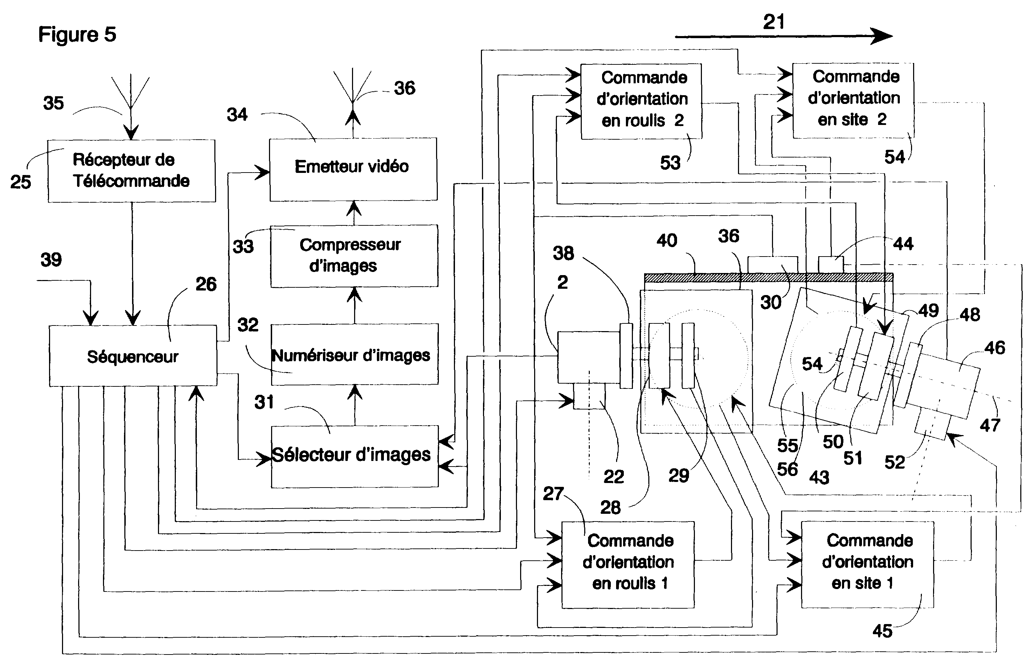

La figure 4 montre le raccordement théorique des surfaces au sol 11 à 17, vues par la caméra au cours de ces positions successives 4 à 10, tel qu'il peut être obtenu en utilisant les dispositions de la figure 3.

A noter que l'observation au sol des écarts de raccordements des images situées côte à côte donne une information sur la hauteur exacte du véhicule aérien par rapport au sol et de corriger, si nécessaire, les coordonnées des points observés sur les côtés de la trajectoire dudit véhicule aérien.

La figure 5 présente une autre variante préférée de l'invention qui comporte une deuxième caméra 46, montée également mobile en roulis autour d'un axe 47, par l'intermédiaire d'un plateau 48, dans un second boîtier 49. Ce boîtier 49 est lui même mobile en site autour d'un axe 54 par rapport au support 40. Cette disposition permet de donner à la caméra 46 une position angulaire en site telle qu'elle ne voit pas la même région au sol que celle balayée par la caméra 2.

Les axes 47 et 54 sont également munis chacun d'un capteur de position angulaire, respectivement 50 et 55, et d'une motorisation, respectivement 51 et 56. Deux électroniques de commande d'orientation, en roulis 53 et en site 57, analogues à celles qui agissent sur les positions angulaires de la caméra 2, commandent les motorisations 51 et 56. Ces électroniques reçoivent :

- une consigne de position, respectivement en roulis et en site, élaborée par le séquenceur 26 à partir des informations reçues par le récepteur de télécommande 35.
- une information en retour provenant du capteur de position angulaire, respectivement 50 et 55,
- le signal issu du gyromètre, respectivement 30 et 44, pour filtrer les mouvements parasites respectivement en roulis et en site, du véhicule aérien.

La caméra 46 est munie d'un objectif 52, de préférence à focale variable, et elle est avantageusement orientée vers l'arrière du véhicule aérien du fait de la commande en site d'un angle qui peut être soit calculé par le séquenceur, soit télécommandé depuis le sol.

Cette disposition a pour effet de créer un décalage temporel entre le moment ou une scène est vue par la caméra 1 et celui où elle passe dans le champ de la caméra 2.

L'opérateur au sol peut orienter cette caméra en fonction de ce qu'il voit sur les images prises par la caméra 2 et qui défilent sur l'écran en fonction de l'altitude et de la vitesse du véhicule aérien, de façon à enregistrer, ou à visualiser sur un autre écran, des images orientées différemment ou à plus haute résolution.

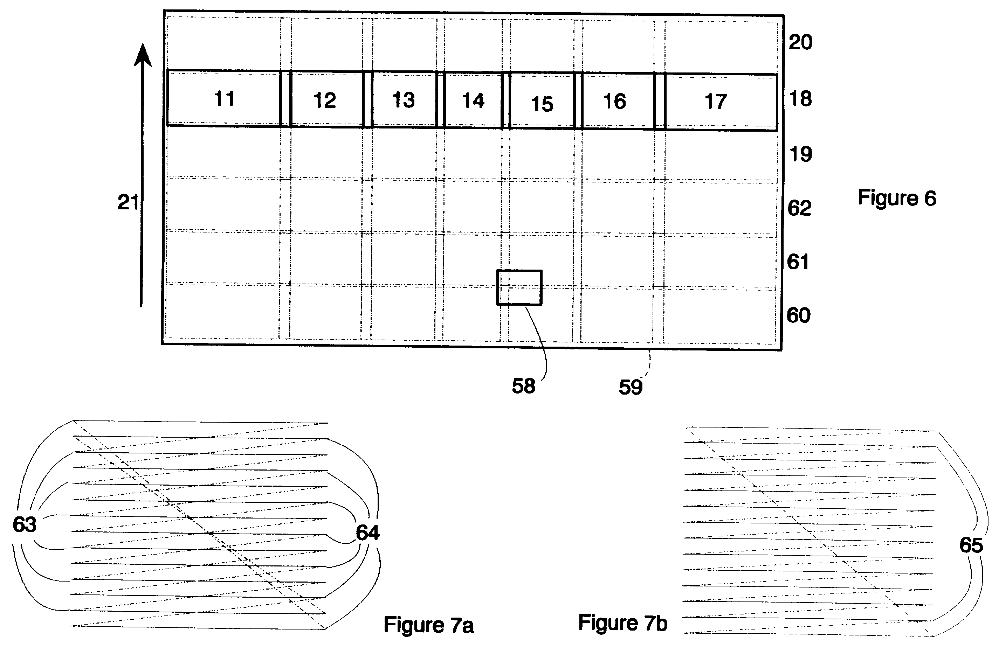

Pour faciliter sa tâche, ainsi que le montre la figure 6, un rectangle 58 est matérialisé sur un écran 59 sur lequel défilent les rangées 19 et 18 des images 11 à 17 ainsi que des rangées précédentes 60, 61 et 62. Ce rectangle 58 matérialise le contour de l'image prise par la caméra 46. Il est positionné sur l'écran 59 en fonction des angles de roulis et de site de ladite caméra 46 ainsi que de l'altitude du véhicule aérien. Ses dimensions sont ajustées en fonction du rapport des distances focales des deux objectifs à focales variables 22 et 52 des deux caméras 2 et 46.

La figure 7 montre le balayage de l'image réalisé pour obtenir le meilleur résultat dans la transmission et la reconstitution des images au sol.

Dans le mode préféré de réalisation de l'invention et à la différence de ce qui est généralement pratiqué, de façon normalisée pour les transmissions d'images, le balayage utilisé dans les caméras 2 et 46 n'est pas entrelacé.

Dans le balayage entrelacé, figure 7a, deux demi-images 63 et 64 contenant chacune la moitié du total des lignes, prélevées une ligne sur deux, sont transmises alternativement à raison d'une demi-image toute les 20 msec. Il en résulte que, du fait du défilement de l'avion, les deux demi-images ne sont pas superposables et ne peuvent donc pas être aisément rassemblées en une seule pour être visualisées ou relues en arrêt sur l'image après un enregistrement.

Dans le balayage préconisé dans le cadre de l'invention, figure 7b, le balayage est continu et toutes les lignes 65 d'une image entière sont transmises toute les 40 msec.

A noter que, si l'on utilise un signal en forme de rampe pour commander l'orientation en site de la caméra 2, l'emploi d'images à balayage non entrelacé n'est pas absolument nécessaire si l'altitude de l'avion est bien connue à l'avance.

Avec une caméra du type à matrice CCD, dans le cadre de l'invention, il est avantageux d'imposer un temps d'obturation électronique tel que le véhicule aérien ne se déplace pas pendant ce temps d'une distance supérieure à la valeur de la résolution de l'image. Dans le cas d'une résolution de 32 cm, et d'une vitesse de 120 km/h, le temps d'obturation doit être inférieur à 10 msec. Pour une résolution de 3 cm, le temps d'obturation doit être inférieur à 1 msec.

Dans tous les cas, les temps d'obturation court permettent de limiter les exigences de stabilité pour les performances des asservissements en site et en roulis.

Enfin le dispositif peut être avantageusement réalisé en utilisant une ou deux caméras sensibles dans l'un des spectres Infra-Rouge, ou encore utilisant l'intensification de lumière.

## Revendications

1. Dispositif de prise de vue à grand champ et à haute résolution pour véhicule aérien du type comprenant :

    - une caméra (2), capable de prendre des images du type télévision,
    - un moyen d'orientation de l'axe de prise de vue (1) de ladite caméra autour d'au moins un axe (3),
    - des moyens de commande et de contrôle de l'orientation dudit axe de prise de vue suivant plusieurs positions angulaires successives (4), (5), (6) dans un plan perpendiculaire au déplacement (21) du véhicule aérien,
    - des moyens de transmission des images, vers des moyens d'utilisation à distance ou à bord par enregistrement,

    caractérisé en ce que ladite caméra (2) est à focale variable et en ce qu'il comporte :

    - un séquenceur (26) pour le calcul de la focale de la caméra, de l'angle entre deux positions angulaires successives et du temps de passage entre lesdites deux positions angulaires successives, ledit séquenceur utilisant une information de largeur de terrain à explorer, une information d'altitude du véhicule aérien et une information de vitesse dudit véhicule aérien.

    - des moyens de sélection d'images utilisant des signaux issus de la caméra et dudit séquenceur.

2. Dispositif de prise de vue à grand champ et à haute résolution pour véhicule aérien selon la revendication 1 et comportant un ensemble caméra orientable composé d'une caméra (2), équipée d'un objectif à focale variable (22), montée sur un support (38) articulé dans un boîtier (36) par un axe (37), et étant commandée autour de cet axe (37) par une électronique (27) de commande d'orientation,
caractérisé en ce que ledit séquenceur (26) calcule la focale à commander audit objectif en fonction de la largeur du terrain à explorer, du nombre d'images à prendre dans ladite largeur et de l'altitude du véhicule aérien, en ce qu'une électronique de commande d'orientation (27) est commandée par ledit séquenceur (26) qui calcule et élabore un signal périodique de commande angulaire (72) à partir d'informations d'altitude et de vitesse du véhicule aérien, de largeur de terrain à explorer et de nombre d'images à prendre dans ladite largeur et en ce que ledit signal périodique de commande angulaire est corrigé des mouvements en roulis dudit véhicule aérien par des signaux de vitesse angulaire issus d'un gyromètre (30).

3. Dispositif de prise de vue à grand champ et à haute résolution pour véhicule aérien selon l'une des revendications 1 ou 2 précédentes et monté mobile sur un axe de site, à l'intérieur d'un autre boîtier (40),
caractérisé en ce qu'il est asservi par un signal de commande de site, en forme de dent de scie à retour rapide, également élaborée par le séquenceur (26) à partir des informations d'altitude et de vitesse du véhicule aérien, et compensée des mouvements en site dudit véhicule aérien par une vitesse angulaire issue d'un gyromètre (44) monté de préférence sur le boîtier (36).

4. Dispositif de prise de vue à grand champ et à haute résolution pour véhicule aérien selon l'une des revendications 1, 2 ou 3,
caractérisé en ce qu'il comporte un sélecteur d'image (31) commandé par le séquenceur (26) lequel utilise le signal vidéo issu de la caméra (2) pour synchroniser la sélection d'image.

5. Dispositif de prise de vue à grand champ et à haute résolution pour véhicule aérien selon l'une des revendications 1, 2 ou 3,
caractérisé en ce qu'il comporte un second ensemble caméra orientable ayant son axe de prise de vue préférentiellement orienté vers l'arrière du véhicule aérien par rapport à l'axe de prise de vue de la caméra (2).

6. Dispositif de prise de vue à grand champ et à haute résolution pour véhicule aérien selon la revendication 5,
caractérisé en ce que le second ensemble caméra orientable est de préférence inclus dans le même boîtier (40) et comporte une caméra (46) équipée d'un objectif (52) à focale variable et montée sur un support (48) articulé dans un boîtier (49) par un axe (54), situé de préférence dans un plan vertical contenant la direction (21) de déplacement du véhicule aérien, mu par une motorisation (51) et fournissant sa position angulaire par rapport au boîtier (49) par un détecteur angulaire (50), l'orientation dudit axe étant commandée par une électronique (53) de commande d'orientation, à partir de signaux de commande angulaire issus du séquenceur (26) et de signaux de vitesse angulaire issus du gyromètre (30), ledit boîtier 49 étant lui même monté mobile par un axe (54), constituant un axe de rotation en site à l'intérieur du boîtier (40), et asservi à une commande de site variable, l'asservissement étant contrôlé par une commande d'orientation en site (54) qui agit sur une motorisation (56) et utilise en retour une information angulaire issue d'un capteur angulaire (55) ainsi qu'une vitesse angulaire issue du gyromètre (44) monté de préférence sur le boîtier (40).

7. Dispositif de prise de vue à grand champ et à haute résolution pour véhicule aérien selon l'une des revendications 5 ou 6 précédentes,
caractérisé en ce que l'image prise par la seconde caméra (46) est matérialisée sur un écran de réception (59), sur lequel est présenté les images prises par la première caméra (2) du dispositif, par un rectangle (58) figurant le contour de ladite image, la position dudit rectangle, par rapport auxdites images de ladite première caméra (2), étant déterminée en fonction de l'altitude du véhicule aérien et des angles de roulis et de site de ladite seconde caméra (46), les dimensions dudit rectangle étant ajustées en fonction des distances focales respectives des deux objectifs (22 et 52) des deux caméras (2 et 46).

8. Dispositif de prise de vue à grand champ et à haute résolution pour véhicule aérien selon l'une des revendications 1, 2, ou 3,
caractérisé en ce qu'une information sur la hauteur par rapport au sol du véhicule aérien est obtenue à partir des écarts de raccordement des images situées côte à côte.

9. Dispositif de prise de vue à grand champ et à haute résolution pour véhicule aérien selon l'une des revendications 2, 3, 5 ou 6,
caractérisé en ce que l'une au moins des commandes d'orientation utilise un signal de vitesse angulaire élaboré par un gyromètre solidaire de la structure du véhicule aérien, ledit signal étant filtré par un filtre (66) dont une partie au moins est de la forme $p/(1+t_1p)^2$, la fréquence de coupure $1/t_1$ dudit filtre étant de préférence comprise entre 0.2 et 0.01 Hz.

10. Dispositif de prise de vue à grand champ et à haute résolution pour véhicule aérien selon l'une des revendications 2, 3, 5 ou 6,
caractérisé en ce que l'une au moins des commandes d'orientation utilise un signal de vitesse angulaire élaboré par un gyromètre solidaire de la partie mobile mue par ladite commande et un signal de position angulaire issu d'un capteur angulaire mesurant la position de la partie mobile, ledit signal de position angulaire étant filtré par un filtre (71) dont une partie au moins est de la forme $1/(1+t_2p)$, la fréquence de coupure $1/t_2$ dudit filtre étant de préférence comprise entre 0.2 et 0.01 Hz.

**Patentansprüche**

1. Vorrichtung für Aufnahmen mit großem Blickfeld und hoher Auflösung für Luftfahrzeuge, umfassend:

   - eine Kamera (2), die Bilder in Fernsehqualität aufnehmen kann,
   - ein Mittel zur Orientierung der Aufnahmeachse (1) der Kamera um wenigstens eine Achse (3),
   - Steuer- und Kontrollmittel zur Orientierung der erwähnten Aufnahmeachse gemäß mehrerer aufeinanderfolgender Winkelpositionen (4), (5), (6) in einer zur Bewegung (21) des Luftfahrzeugs senkrechten Ebene,
   - Mittel zur Übertragung der Bilder an entfernte oder an Bord befindliche Mittel zur Verwertung durch Aufzeichnung,

   dadurch gekennzeichnet, daß die Kamera (2) eine variable Brennweite besitzt und umfaßt:

   - einen Sequencer (26) zur Berechnung der Brennweite der Kamera, des Winkels zwischen zwei aufeinanderfolgenden Winkelpositionen und der Übergangszeit zwischen den beiden aufeinanderfolgenden Winkelpositionen, wobei der Sequencer eine Information über die Größe des zu erkundenden Gebietes, eine Information über die Höhe des Luftfahrzeugs und eine Information über die Geschwindigkeit des Luftfahrzeugs verwertet, und
   - Mittel zur Auswahl von Bildern unter Verwendung von Signalen, die von der Kamera und dem Sequencer gesendet werden.

2. Vorrichtung für Aufnahmen mit großem Blickfeld und hoher Auflösung für Luftfahrzeuge nach Anspruch 1, die eine verstellbare Kameraeinheit umfaßt, welche aus einer Kamera (2) besteht, die mit einem Objektiv variabler Brennweite (22) ausgestattet und auf einem Ständer (38) montiert ist, der in einem Gehäuse (36) um eine Achse (37) schwenkbar ist und durch eine Elektronik (27) zur Orientierungssteuerung um diese Achse (37) gesteuert wird,
dadurch gekennzeichnet, daß der erwähnte Sequencer (26) die dem Objektiv zu befehlende Brennweite in Abhängigkeit von der Größe des zu erkundenden Gebietes, der Anzahl der innerhalb der besagten Größe aufzunehmenden Bilder und der Flughöhe des Luftfahrzeugs berechnet, daß eine Elektronik zur Orientierungssteuerung (27) von dem erwähnten Sequencer (26) gesteuert wird, der ein periodisches Signal zur Winkelsteuerung (72) berechnet und erzeugt, und zwar ausgehend von Informationen bezüglich Flughöhe und -geschwindigkeit des Luftfahrzeugs, der Größe des zu erkundenden Terrains und der Anzahl der in der erwähnten Größe aufzunehmenden Bilder, wobei das periodische Signal zur Winkelsteuerung bezüglich der Rollbewegungen des Luftfahrzeugs durch von einem Gyrometer (30) gesendete Winkelgeschwindigkeitssignale korrigiert wird.

3. Vorrichtung für Aufnahmen mit großem Blickfeld und hoher Auflösung für Luftfahrzeuge nach einem der vorhergehenden Ansprüche 1 oder 2, die beweglich auf einer Höhenachse im Inneren des Gehäuses (40) montiert ist,
dadurch gekennzeichnet, daß sie durch ein sägezahnförmiges Signal zur Höhensteuerung mit rascher Wiederholung gesteuert wird, das ebenfalls von dem Sequencer (26), ausgehend von Informationen bezüglich Flughöhe und -geschwindigkeit des Luftfahrzeugs, erzeugt wird, wobei die Rollbewegungen des Luftfahrzeugs durch eine Winkelgeschwindigkeit kompensiert werden, die von einem vorzugsweise auf dem Gehäuse (36) montierten Gyrometer (44) gesendet wird.

4. Vorrichtung für Aufnahmen mit großem Blickfeld und hoher Auflösung für Luftfahrzeuge nach einem der Ansprüche 1, 2 oder 3,
dadurch gekennzeichnet, daß sie einen Bildwähler (31) umfaßt, der durch den Sequencer (26) gesteuert wird, welcher die Bildauswahl unter Verwendung eines von der Kamera (2) gesendeten Videosignals synchronisiert.

5. Vorrichtung für Aufnahmen mit großem Blickfeld und hoher Auflösung für Luftfahrzeuge nach einem der Ansprüche 1, 2 oder 3,
dadurch gekennzeichnet, daß sie eine zweite verstellbare Kameraeinheit umfaßt, deren Aufnahmeachse, bezogen auf die Aufnahmeachse der Kamera (2), vorzugsweise zum Heck des Luftfahrzeugs hin gerichtet ist.

6. Vorrichtung für Aufnahmen mit großem Blickfeld und hoher Auflösung für Luftfahrzeuge nach Anspruch 5,
dadurch gekennzeichnet, daß die zweite verstellbare Kameraeinheit vorzugsweise in demselben Gehäuse (40) angeordnet ist und eine Kamera (46) umfaßt, die mit einem Objektiv (52) variabler Brennweite ausgestattet und auf einem Ständer (48) in einem Gehäuse (49) montiert ist, der sich um eine Achse (54) schwenken läßt, die sich vorzugsweise in einer vertikalen, die Fortbewegungsrichtung (21) des Luftfahrzeugs enthaltenden Ebene befindet, durch eine Motoreinheit (51) bewegt wird und ihre Winkelposition bezüglich des Gehäuses (49) über einen Winkelmesser (50) liefert, wobei die Orientierung der Achse über eine Elektronik (53) zur Orientierungssteuerung gesteuert wird, und zwar ausgehend von Winkelsteuerungssignalen, die von dem Sequencer (26) gesendet werden, und von Winkelgeschwindigkeitssignalen, die von dem Gyrometer (30) gesendet werden, wobei das Gehäuse 49 selbst um eine Achse (54) beweglich montiert ist, die eine höhenbezogene Rotationsachse im Inneren des Gehäuses (40) bildet und von einer variablen Höhensteuerung gesteuert wird, wobei die Steuerung durch eine Höhenorientierungssteuerung (54) kontrolliert wird, die eine Motoreinheit (56) betätigt und ihrerseits eine von einem Winkelmeßfühler (55) gesendete Winkelinformation sowie eine von dem vorzugsweise auf dem Gehäuse (40) montierten Gyrometer (44) gesendete Winkelgeschwindigkeit verwendet.

7. Vorrichtung für Aufnahmen mit großem Blickfeld und hoher Auflösung für Luftfahrzeuge nach einem der vorherigen Ansprüche 5 oder 6,
dadurch gekennzeichnet, daß das von der zweiten Kamera (46) aufgenommene Bild auf einem Empfangsbildschirm (59), auf dem die von der ersten Kamera (2) der Vorrichtung aufgenommenen Bilder dargestellt sind, durch ein Rechteck (58) markiert ist, das die Kontur des erwähnten Bildes zeigt, wobei die Position des Rechtecks, bezogen auf die Bilder der ersten Kamera (2), in Abhängigkeit von der Höhe des Luftfahrzeugs und den Roll- und Höhenwinkeln der zweiten Kamera (46) bestimmt wird, wobei die Abmessungen des Rechtecks in Abhängigkeit von den jeweiligen Brennweiten der beiden Objektive (22 und 52) der beiden Kameras (2 und 46) eingestellt werden.

8. Vorrichtung für Aufnahmen mit großem Blickfeld und hoher Auflösung für Luftfahrzeuge nach einem der Ansprüche 1, 2 oder 3, dadurch gekennzeichnet, daß man eine Information über die Höhe des Luftfahrzeugs vom Boden anhand des Abstands der nebeneinander angeordneten Bilder erhält.

9. Vorrichtung für Aufnahmen mit großem Blickfeld und hoher Auflösung für Luftfahrzeuge nach einem der Ansprüche 2, 3, 5 oder 6, dadurch gekennzeichnet, daß wenigstens eine der Orientierungssteuerungen ein Winkelgeschwindigkeitssignal verwendet, das von einem fest mit der Struktur des Luftfahrzeugs verbundenen Gyrometer erzeugt wird, wobei das Signal durch einen Filter (66) gefiltert wird, der wenigstens teilweise die Form p/(1+t1p)2 besitzt, wobei die Schnittfrequenz 1/t1 des Filters vorzugsweise im Bereich von 0,2 bis 0,01 Hz liegt.

10. Vorrichtung für Aufnahmen mit großem Blickfeld und hoher Auflösung für Luftfahrzeuge nach einem der Ansprüche 2, 3, 5 oder 6, dadurch gekennzeichnet, daß wenigstens eine der Orientierungssteuerungen ein Winkelgeschwindigkeitssignal, das von einem Gyrometer erzeugt wird, der fest mit dem von der Steuerung bewegten beweglichen Teil verbunden ist, und ein Winkelpositionssignal verwendet, das von einem Winkelgeber erzeugt wird, der die Position des beweglichen Teils bestimmt, wobei das Winkelpositionssignal durch einen Filter (71) gefiltert wird, der wenigstens teilweise die Form 1/(1+t2p) besitzt, wobei die Schnittfrequenz 1/t2 des Filters vorzugsweise im Bereich von 0,2 bis 0,01 Hz liegt.

**Claims**

1. Wide-field, high-resolution camera device for aircraft, of the type comprising:

   - a camera (2) capable of taking television-type pictures,
   - a means for orienting the camera axis (1) of said camera about at least one axis (3),
   - a means for controlling and monitoring the orientation of said camera axis according to several successive angular positions (4), (5), (6) in a plane perpendicular to the direction of travel (21) of the aircraft,
   - a means for transmitting images to a remotely-located or on-board utilisation means by recording,

   characterised in that said camera (2) is of variable focal length and in that it comprises:

   - a sequencer (26) to compute the focal length of the camera, the angle between two successive angular positions and the transit time between said two successive angular positions, said sequencer using width information on the field to be explored, altitude data concerning the aircraft and information concerning the speed of said aircraft,
   - a means for selecting images using signals from the camera and from said sequencer.

2. Wide-field, high-resolution camera device for aircraft as claimed in claim 1 and comprising a steerable camera unit composed of a camera (2), fitted with a zoom lens (22), mounted on a bracket (38) articulated inside a case (36) by means of an axis (37), and being controlled about this axis (37) by orientation control electronics (27), characterised in that said sequencer (26) computes the focal length instruction to be transmitted to said lens as a function of the width of the field to be explored, the number of images to be taken within said width, and the altitude of the aircraft, and in that the orientation control electronics (27) are controlled by said sequencer (26) which computes and produces a periodic angular control signal (72) from the aircraft's altitude and speed data, the width of the field to be explored and the number of images to be taken within said width, and in that said periodic angular control signal is corrected to offset the roll of said aircraft by means of angular speed signals provided by a gyrometer (30).

3. Wide-field, high-resolution camera device for aircraft as claimed in either claim 1 or claim 2 and mounted mobile on a yaw axis inside another case (40), characterised in that it is automatically controlled by a yaw control signal, of saw-tooth shape with a steep return edge, also produced by the sequencer (26) from the aircraft's altitude and speed, and compensated to offset the yaw motion of said aircraft by means of an angular speed coming from said gyrometer (44) mounted preferably on the case (36).

4. Wide-field, high-resolution camera device for aircraft as claimed in any one of claims 1, 2 or 3, characterised in that it comprises an image selector (31) controlled by the sequencer (26), the latter using the video signal from the camera (2) to synchronise the image selection.

5. Wide-field, high-resolution camera device for aircraft as claimed in any one of claims 1, 2 or 3, characterised in that it comprises a second steerable camera unit having its camera axis preferably oriented towards the rear of the aircraft in relation to the camera axis of the camera (2).

6. Wide-field, high-resolution camera device for aircraft as claimed in claims 5, characterised in that the second steerable camera unit is preferably included in the same case (40) and comprises a camera (46) fitted with a zoom (52) of variable focal lenght and mounted on a bracket (48) articulated inside a case (49) by means of an axis (54), situated preferably in a vertical plane containing the direction of travel (21) of the aircraft, driven by a motor (51) and providing its angular position in relation to the case (49) by means of an angle detector (50), the orientation of said axis being controlled by orientation control electronics (53) from angular control signals coming from the sequencer (26) and from angular speed signals coming from the gyrometer (30), said case (49) being itself mounted mobile about an axis (54), constituting a yaw spin axis inside the case (40), and automatically controlled by a variable yaw control, the automatic control being controlled by a yaw orientation control (54) which acts on a motor (56) and uses, in return, an angular datum coming from an angle sensor (55) as well as an angular speed datum coming from the gyrometer (44) mounted preferably on the case (40).

7. Wide-field, high-resolution camera device for aircraft as claimed in either claim 5 or claim 6, characterised in that the image taken by the second camera (46) is materialised on a reception screen (59), on which are presented the images taken by the first camera (2) of the device, by a rectangle (58) representing the contour of said image, the position of said rectangle, in relation to said images of said first camera (2), being determined as a function of the altitude of the aircraft and of the roll and yaw angles of said second camera (46), the dimensions of said rectangle being adjusted as a function of the respective focal lengths of the two lenses (22 and 52) of the two cameras (2 and 46).

8. Wide-field, high-resolution camera device for aircraft as claimed in any one of claims 1, 2 or 3, characterised in that information on the height of the aircraft above the ground is obtained from the junction gaps between images situated side by side.

9. Wide-field, high-resolution camera device for aircraft as claimed in any one of claims 2, 3, 5 or 6, characterised in that at least one of the orientation controls uses an angular speed signal produced by a gyrometer integral with the structure of the aircraft, said signal being filtered by a filter (66) of which at least one part is shaped $p/(1+t_1p)^2$, the cut-off frequency $1/t_1$ of said filter being preferably included between 0.2 and 0.01 Hz.

10. Wide-field, high-resolution camera device for aircraft as claimed in any one of claims 2, 3, 5 or 6, characterised in that at least one of the orientation controls uses an angular speed signal produced by a gyrometer integral with the mobile part driven by said control and an angular position signal coming from an angle sensor measuring the position of the mobile part. said angular position signal being filtered by a filter (71) of which at least one part is shaped $1/(1+t_2p)$, the cut-off frequency $1/t_2$ of said filter being preferably included between 0.2 and 0.01 Hz.

Figure 1a

Figure 1b

Figure 4

Figure 2

EP 0 657 019 B1

Figure 3

Récepteur de Télécommande — 25, 35

Emetteur vidéo — 34, 36

Compresseur d'images — 33

Numériseur d'images — 32

Séquenceur — 26, 39

Sélecteur d'images — 31

Commande d'orientation en site — 45

Commande d'orientation en roulis — 27

2, 22, 28, 29, 30, 36, 40, 41, 42, 43, 44

EP 0 657 019 B1

Figure 5

**21** →

**35**

**34**

**36**

**25** Récepteur de Télécommande

Emetteur vidéo

Commande d'orientation en roulis 2

Commande d'orientation en site 2

**53**

**54**

**39**

**33** Compresseur d'images

**38**
**2**

**40**

**36**

**44**

**30**

**49** **48**

**26**

**32** Numériseur d'images

**46**

**54**

Séquenceur

**31**

**55** **50**

**47**

Sélecteur d'images

**22**

**29**

**56** **51** **52**

**43**

**27**

**28**

Commande d'orientation en roulis 1

Commande d'orientation en site 1

**45**

EP 0 657 019 B1

15

Figure 6

Figure 7b

Figure 7a

16

Figure 8

Figure 9

Figure 10b

Figure 10a

Figure 10c